# EUROPÄISCHE PATENTSCHRIFT

(11) **EP 3 085 456 B1**
(45) Veröffentlichungstag und Bekanntmachung des Hinweises auf die Patenterteilung: **26.09.2018**
(21) Anmeldenummer: 15164415.0
(22) Anmeldetag: 21.04.2015
(51) Int. Cl.: B05B 7/00, A47K 5/14, B05B 11/00

(54) **SCHAUMPUMPE**
FOAM PUMP
POMPE À MOUSSE

(43) Veröffentlichungstag der Anmeldung: 26.10.2016
(73) Patentinhaber: Hübner GmbH & Co. KG, 34123 Kassel (DE)
(72) Erfinder: Grimm, Ralf, 34286 Spangenberg (DE); Langenfelder, Frank, 34130 Kassel (DE)
(74) Vertreter: Patentanwälte Walther Hinz Bayer PartGmbB

(56) Entgegenhaltungen:
- EP-A1- 2 082 809
- WO-A2-2013/055893
- DE-U1-202011 100 895

## Beschreibung

Die Erfindung betrifft eine Schaumpumpe.

Schaumpumpen sind aus dem Stand der Technik hinreichend bekannt. Derartige Schaumpumpen werden häufig verwandt, um aus einem Medium, das in pastöser, insbesondere aber flüssiger Form vorliegt, durch Vermischung mit Luft einen Schaum herzustellen. Hierbei kann das Medium/Luftgemisch magerer oder auch fetter sein, dass heißt, der Luftanteil bzw. der Medienanteil im Schaum kann variieren. Wie das Verhältnis zwischen Medium und Luft eingestellt wird, ist abhängig von der Art des Mediums und, wie bereits ausgeführt, auch abhängig davon, ob das Gemisch magerer oder fetter sein soll.

Bei einer aus dem Stand der Technik bekannten Schaumpumpe ist es nun so, dass die Einstellung des Verhältnisses von Medium einerseits und Luft andererseits fest vorgegeben ist. Das heißt, dass eine Änderung des Verhältnisses von Medium und Luft einen Austausch der Schaumpumpe bedingt.

Aus der EP 2 082 809 A1 ist eine Schaumpumpe mit einem Pumpengehäuse bekannt, wobei in dem Pumpengehäuse ein Kolbengehäuse gegen die Kraft einer Feder verschieblich gelagert ist. Durch das Kolbengehäuse in Verbindung mit dem Pumpengehäuse wird eine variable Luftkammer gebildet. In dem Pumpengehäuse ist ein Mediengehäuse angeordnet, das durch ein Ventil mit einem Medienbehälter in Verbindung steht. Das Mediengehäuse nimmt einen Medienkolben verschieblich auf, wobei der Medienkolben eine mit dem Mediengehäuse durchgängige Medienkammer bildet. Die Medienkammer ist durch ein Ventil gegenüber einer Vormischkammer abgetrennt, wobei sich die eigentliche Mischkammer durch einen Siebeinsatz an die Vormischkammer anschließt. Aus der Mischkammer erfolgt der Austritt des Schaums eines Mediums, z. B. Flüssigseife.

Die Luftkammer steht durch eine durch den Medienkolben verschließbare Lufteinlassöffnung mit der Vormischkammer in Verbindung.

Wird die Pumpe durch Eindrücken des Kolbenaehäuses in das Pumpenaehäuse aktiviert, wird die Lufteinlassöffnung freigegeben. Parallel hierzu öffnet das Ventil der Medienkammer. Insofern strömen Luft und Medium in die Vormischkammer.

Um eine Änderung der Gemischzusammensetzung herbeizuführen, ist erforderlich, dass zumindest die Größe der Luftkammer und die Größe der Medienkammer verändert werden, was einen Austausch der Schaumpumpe gleich oder zumindest nahe kommt.

Die der Erfindung zugrunde liegende Aufgabe besteht nun darin, hier Abhilfe zu schaffen, dass heißt, dass z. B. bei einer Änderung des Mediums bzw. des Produktes nicht notwendigerweise ein Austausch der gesamten Schaumpumpe erforderlich ist.

Zur Lösung der Aufgabe wird bei einer Schaumpumpe mit einem Pumpenbalg erfindungsgemäß vorgeschlagen, dass der Pumpenbalg ausgabeseitig einen Stutzen aufweist, wobei der Stutzen eine Ventilstange mit einer zentrischen Bohrung zur Bildung einer Mischkammer aufweist, wobei die Mischkammer mit dem Luftraum des Pumpenbalges durch mindestens eine Luftauslassöffnung in Verbindung steht, wobei im Bereich des Stutzens des Pumpenbalges eine verschließbare Lufteinlassöffnung in dem Luftraum des Pumpenbalges vorgesehen ist, wobei die Mischkammer mit einer Medienkammer durch eine verschließbare Medieneinlassöffnung in Verbindung steht, wobei die Medienkammer durch eine Medienanpassöffnung mit einem Medienbehälter verbunden ist, wobei durch die Variabilität des Querschnitts der Medienanpassöffnung die Gemischzusammensetzung einstellbar ist. Durch die Medienanpassöffnung im Medienbehälter besteht nun durch die Variation des Durchmessers bzw. der Öffnungsweite der Medienanpassöffnung die Möglichkeit, der Einstellung eines fetteren oder magereren Luft-/Mediengemisches bzw. der Anpassung des Luft-/Mediengemisches an ein geändertes aufzuschäumendes Produkt. Zur Veränderung der Medienanpassöffnung in der Größe kann insbesondere vorgesehen sein, in die Medienanpassöffnung ein Reduzierstück einzusetzen, wobei das Reduzierstück einen Innendurchmesser aufweist, der abgestimmt ist auf das gewünschte Mischungsverhältnis zwischen Medium einerseits und Luft andererseits. Hierdurch kann, wie bereits ausgeführt, somit auf einfache und vor allen Dingen preiswerte Weise das Gemisch fetter oder magerer eingestellt werden, bzw. das Mischungsverhältnis auf ein beispielsweise geändertes Medium eingestellt werden.

Vorteilhafte Merkmale und Ausgestaltungen der Erfindung ergeben sich aus den Unteransprüchen.

So ist insbesondere vorgesehen, dass die Ventilstange ausgabeseitig einen Betätigungsteller für den Pumpenbalg aufweist. Die Schaumpumpe wird zusammen mit einem Medienbehälter, beispielsweise einer Kunststoffflasche, in eine Spendereinrichtung eingesetzt. Die Spendereinrichtung umfasst einen Hebel, der in Verbindung mit dem Betätigungsteller steht, durch den wiederum die Balgpumpe betätigbar ist.

Es wurde bereits darauf hingewiesen, dass eine verschließbare Lufteinlassöffnung zu dem Luftraum des Pumpenbalges vorgesehen ist. Diese Lufteinlassöffnung ist im Übergangsbereich des Stutzens des Pumpenbalges zum Betätigungsteller angeordnet. Hieraus wird deutlich, dass die Lufteinlassöffnung zwischen dem stirnseitigen Ende des Stutzens und dem Betätigungsteller vorgesehen ist. Verschließbar ist die Lufteinlassöffnung durch mindestens eine Dichtung, z. B. einem O-Ring, dass heißt, eine sogenannte Weichteildichtung. Der Einsatz solcher Weichteildichtungen hat zum einen den Vorteil, dass durch die Dichtung die entsprechende Öffnung dicht abschließt, und zum anderen, dass die Toleranzen der Dichtungselemente verhältnismäßig groß gewählt werden können.

Nach einem weiteren Merkmal der Erfindung ist vorgesehen, dass die Ventilstange relativ zum Pumpenbalg beweglich durch den Pumpenbalg, und hier insbesondere beweglich im Stutzen des Pumpenbalgs aufnehmbar ist. Hieraus wird deutlich, dass bei Betätigung des Betätigungstellers die Ventilstange innerhalb des Pumpenbalges, und hier insbesondere innerhalb des Stutzens des Pumpenbalges, verschieblich gelagert ist.

Es wurde bereits zu eingangs darauf hingewiesen, dass die Schaumpumpe eine Medienkammer umfasst. Die Medienkammer steht mit der Mischkammer durch eine verschließbare Medieneinlassöffnung in Verbindung. Die Medieneinlassöffnung ist hierbei durch eine Ventilstangendichtung verschließbar, wobei die Ventilstangendichtung relativ verschieblich zu der Medieneinlassöffnung an der Ventilstange anliegt, sodass die Ventilstange relativ zur Ventilstangendichtung beweglich ist. Darüber hinaus ist vorgesehen, dass die Ventilstangendichtung an der Wandung der Medienkammer verschieblich anliegt. Das heißt, dass die Ventilstangendichtung zwei Funktionen übernimmt. Die erste Funktion der Ventilstangendichtung besteht darin, die Medieneinlassöffnung zu verschließen. Die Ventilstangendichtung, die ebenfalls als sogenannte Weichteildichtung ausgebildet ist, gibt die Medieneinlassöffnung nach Verschiebung der Ventilstange um einen bestimmten Wert frei. Hierbei ist die Ventilstangendichtung auf der Ventilstange in einer Nut im Bereich der Medieneinlassöffnung der Ventilstangendichtung verschiebilch gelagert. Wird nun die Ventilstange verschoben, und zwar insbesondere in die Medienkammer hinein verschoben, dann verschiebt sich die Ventilstangendichtung in der Nut so weit, bis die Medieneinlassöffnung freigegeben ist. Um nun ein Eindringen des in der Medienkammer befindlichen Mediums, beispielsweise einer Flüssigseife, in die Mischkammer zu ermöglichen, wird die Ventilstange zusammen mit der Ventilstangendichtung weiter in die Medienkammer hineinverschoben. Durch die Verminderung des Restvolumens der Medienkammer gelangt nun das Medium durch die Mediumeinlassöffnung über eine in der Ventilstange angeordnete Ventilstangenbohrung in die Mischkammer der Ventilstange. Hieraus wird deutlich, dass die Ventilstange im Bereich der Medienkammer nach Art eines Kolbens wirkt, wobei die Ventilstangendichtung die Funktion ähnlich einem Kolbenring hat.

In diesem Zusammenhang ist im Einzelnen des Weiteren vorgesehen, dass die Medienkammer domartig ausgebildet ist, und am stirnseitigen Ende der Medienkammer die Medienanpassöffnung angeordnet ist. Die Medienanpassöffnung stellt sich im einfachsten Fall als Bohrung dar, wobei an anderer Stelle bereits erläutert worden ist, dass die Größe bzw. der Durchmesser der Medienanpassöffnung variabel sein kann, und zwar durch Einsetzen eines sogenannten Reduzierstückes, wie dies bereits an anderer Stelle näher erläutert worden ist. Es wurde bereits darauf hingewiesen, dass die Ventilstange in Verbindung mit der Ventilstangendichtung im Bereich der Medienkammer als Kolben fungiert. Die Menge an in die Medieneinlassöffnung einströmenden Mediums ist abhängig davon, wie hoch die durch Verschiebung der Ventilstange in die Medienkammer bewirkte Druckerhöhung ist. Ist die Medienanpassöffnung verhältnismäßig groß, wird bei Verschiebung der Ventilstange in die Medienkammer hinein der Gegendruck durch das Medium kleiner sein als umgekehrt, wenn nämlich die Medienanpassöffnung verhältnismäßig klein gewählt wird. Hieraus wird deutlich, dass bei einer im Durchmesser großen Medienanpassöffnung das Luft-/Mediengemisch verhältnismäßig magerer ist, als bei einer Medienanpassöffnung kleineren Durchmessers bei gleichem Medium.

Nach einem weiteren vorteilhaften Merkmal der Erfindung ist der Pumpenbalg als Faltenbalg ausgebildet, wobei der Faltenbalg vorteilhaft konisch auf den Stutzen zulaufend ausgebildet ist. Der Faltenbalg ist insbesondere selbst aufstellend, was bedeutet, dass der Faltenbalg das Bestreben hat, seine Ursprungsposition nach einer Verformung wieder einzunehmen. Dies ist relevant vor folgendem Hintergrund. Es wurde bereits darauf hingewiesen, dass die Lufteinlassöffnung im Übergangsbereich vom stirnseitigen Ende des Stutzens zum Betätigungsteller durch mindestens einen O-Ring abgedichtet ist. Nimmt man nun zunächst an, dass der Balg sich im zusammengedrückten Zustand befindet, und geht man davon aus, dass dann, wenn der Betätigungsteller unter keiner Last mehr steht, sich der Faltenbalg aufgrund der ihm eigenen Rückstellkraft in die Ausgangslage zurückstellt, wobei dann zunächst durch die Stirnseite des Stutzens der O-Ring noch in Richtung auf den Betätigungsteller gedrückt wird, mit der Folge, dass für einen kurzen Moment die Lufteinlassöffnung im Übergangsbereich des Stutzens zum Pumpenbalg geschlossen bleibt, wobei dieser kurze Moment allerdings ausreichend ist, um den Schaum, der sich außerhalb der Mischkammer befindet, aufgrund des Unterdrucks im Pumpenbalg wieder zurück in die Mischkammer zu ziehen. In diesem Zusammenhang sei darauf hingewiesen, dass der Betätigungsteller für die Spendereinrichtung einen auslassseitig angeordneten Bund aufweist, wobei der Bund der Aufnahme eines Siebeinsatzes dient, wobei der Siebeinsatz zu beiden Enden ein Gewebe aufweist, wobei die Gewebe der Schaumbildung dienen. Der in diesem Siebeinsatz befindliche Schaum wird zurückgezogen, dass heißt, es findet kein Nachtropfen statt.

Weiterhin ist vorgesehen, dass der Pumpenbalg mit einem Gehäuse in Verbindung steht, wobei das Gehäuse einen Gehäusekranz zur Aufnahme des Medienbehälters aufweist. Hieraus wird deutlich, dass auf dem Gehäusekranz der Medienbehälter, beispielsweise eine Kunststoffflasche, aufgesteckt oder aufgedreht wird.

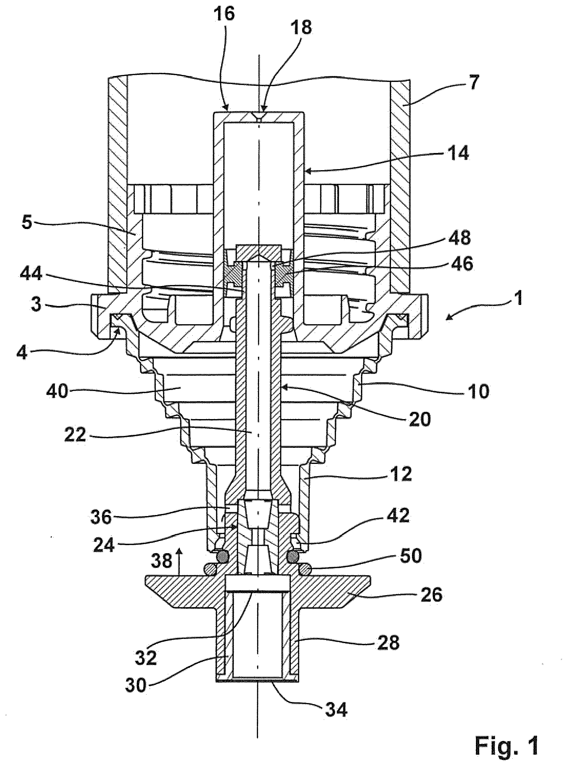

Anhand der Zeichnung wird die Erfindung nachstehend beispielhaft näher erläutert.

Die Schaumpumpe 1 umfasst das Gehäuse 3 mit dem Gehäusekranz 5 auf den der Medienbehälter 7 aufsteckbar ist, wie sich dies schematisch der Zeichnung entnehmen lässt. Das Gehäuse 3 nimmt den Pumpenbalg 10 auf, wobei der Pumpenbalg als konisch auf den Stutzen 12 zulaufender Faltenbalg ausgebildet ist. Zur Aufnahme des Pumpenbalges 10 durch das Gehäuse 3 ist das Gehäuse 3 mit einer entsprechenden umlaufenden Nut 4 versehen.

Das Gehäuse umfasst nicht nur den Gehäusekranz 5 zur Aufnahme des Medienbehälters 7, sondern besitzt darüber hinaus noch die domartig ausgebildete Medienkammer 14. Die Medienkammer 14 weist im stirnseitigen Boden 16 die Medienanpassöffnung 18 auf. Die Medienanpassöffnung 18 ist derart ausgebildet, dass dort ein Reduzierstück (nicht dargestellt) einsetzbar ist, um den lichten Durchmesser der Medienanpassöffnung 18 variabel gestalten zu können. Hierauf wird an anderer Stelle noch einmal eingegangen werden.

Der Stutzen 12 nimmt relativ zum Stutzen 12 verschieblich die insgesamt mit 20 bezeichnete Ventilstange auf. Die Ventilstange 20 umfasst eine Ventilstangenbohrung 22, an die sich im Bereich des Stutzens 12 die Mischkammer 24 anschließt. Die Ventilstange 20 zeigt darüber hinaus am ausgabeseitigen Ende den Betätigungsteller 26 für die Spendereinrichtung (nicht dargestellt), wobei der Betätigungsteller 26 einen Betätigungstellerbund 28 aufweist, der der Aufnahme des mit 30 bezeichneten Siebeinsatzes dient, wobei der Siebeinsatz 30 am oberen Ende und am unteren Ende jeweils ein Gewebe 32, 34 zeigt. Die beiden Gewebe 32 und 34 sorgen mit für die Schaumbildung. Die Ventilstange 20 besitzt im Bereich der Mischkammer 24 umfangsverteilt mehrere Luftauslassöffnungen 36, wobei bei Verschiebung des Betätigungstellers 26 in Richtung des Pfeils 38 bei Verformung des als Faltenbalg ausgebildeten Pumpenbalges 10 die in dem Luftraum 40 des Pumpenbalges 10 vorhandene Luft durch die Luftauslassöffnungen 36 in die Mischkammer 24 hineingepresst wird. Bei Verschiebung des Betätigungstellers 26 in Richtung des Pfeils 38 wird hierbei die Lufteinlassöffnung 42 im Übergangsbereich des Stutzens 12 zum Betätigungsteller 26 verschlossen.

Betrachtet man nunmehr das in der Zeichnung obere Ende der Ventilstange 20, so erkennt man eine umlaufende Nut 44 in der Ventilstange 20. In der umlaufenden Nut lagert die Ventilstangendichtung 46. Die axiale Erstreckung der Ventilstangendichtung in der Nut 44 ist geringer als die Länge der Nut 44, und zwar um die Größe der im Bereich der Nut in der Ventilstange 20 umlaufend angeordneten Medieneinlassöffnungen 48, sodass dann, wenn die Ventilstange in Richtung des Pfeils 38 verschoben wird, zunächst sich die Ventilstangendichtung 46 entlang der Nut 44 in der Zeichnung nach unten bewegen wird, um so die umfangsverteilt in der Nut der Ventilstange angeordneten Medieneinlassöffnungen 48 freizugeben. Durch diese Medieneinlassöffnungen strömt dann das in der Medienkammer 14 angeordnete Medium, beispielsweise eine Flüssigseife in die Ventilstangenbohrung 22 und durch die Ventilstangenbohrung 22 hindurch in die Mischkammer 24. Wird nun die Ventilstange weiterhin in Richtung des Pfeils 38 verschoben, fungiert die Ventilstange 20 in Verbindung it der Ventilstangendichtung 46 im oberen Bereich, also im Bereich der Medienkammer 14, nach Art eines Kolbens mit Kolbenring und verdrängt das in der Medienkammer 14 vorhandene flüssige Medium, z. B. die zuvor erwähnte Flüssigseife, wobei durch den Überdruck in der Medienkammer dieses Medium in der Medienkammer durch die Medieneinlassöffnung 48, wie bereits ausgeführt, in die Ventilstangenbohrung 22 gelangt. Während der Verschiebung der Ventilstange 20 in Richtung des Pfeils 38 in der domartigen Medienkammer 14 gleitet die Ventilstangendichtung 46 an der Innenwandung der Medienkammer 14 entlang, dass heißt, wie ebenfalls bereits ausgeführt, fungiert die Ventilstange 20 in Verbindung mit der Ventilstangendichtung 46 hierbei nach Art eines Kolbens.

Nun wurde bereits an anderer Stelle darauf hingewiesen, dass im stirnseitigen Boden 16 der Medienkammer 14 sich die Medienanpassöffnung 18 befindet. Diese Medienanpassöffnung ist in Bezug auf ihren Querschnitt variabel, beispielsweise dadurch, dass man hier ein Reduzierstück einführen kann, dessen Innendurchmesser kleiner ist, als der Durchmesser der Medienanpassöffnung 18. Ist der Querschnitt der Medienanpassöffnung 18 nunmehr groß gewählt, dann wird bei Verschiebung der Ventilstange 20 in Richtung des Pfeils 38 bei entsprechendem Druck in der Medienkammer 14 verhältnismäßig viel von dem Medium durch die Medienanpassöffnung 18 in den Medienbehälter 7 entweichen, aber verhältnismäßig wenig durch die Medieneinlassöffnung 48 in die Ventilstangenbohrung 22, die auch als Mischbohrung bezeichnet werden kann, eindringen. Das heißt, dass Gemisch in der Mischkammer wird bei vorgegebener Luftmenge, die durch das Volumen des Luftraumes 40 des Pumpenbalges 10 bestimmt ist, verhältnismäßig magerer (mehr Luft) sein, als dies der Fall ist, wenn die Medienanpassöffnung 18 im Querschnitt kleiner gewählt wird. Denn dann wird durch die Medieneinlassöffnung 48 verhältnismäßig mehr Medium in die Ventilstangenbohrung 22 eindringen. Das heißt, dass in diesem Fall dann das Gemisch zwischen Luft und Medium fetter wird.

Wird nun der Betätigungsteller 26 losgelassen, dass heißt, der Pumpenbalg 10 wird entlastet, dann hat der Pumpenbalg 10 das Bestreben in seine Ausgangsstellung zurückzugehen, wie dies in der Zeichnung dargestellt ist. Das heißt, der Pumpenbalg stellt sich auf. Zu Beginn der Rückstellbewegung des Balgs drückt allerdings noch der Stutzen 12 mit seinem stirnseitigen Ende auf die Dichtung 50, die im vorliegenden Fall als O-Ring ausgebildet ist. Das heißt, dass zu Beginn der Rückstellung des Pumpenbalges 10 im Bereich der Mischkammer 24 ein Unterdruck entsteht, wobei durch diesen Unterdruck das im Bereich des Betätigungstellerbundes 28 befindliche Schaumgemisch in die Mischkammer zurückgezogen wird. Wenn dann die Lufteinlassöffnung 42 freigegeben wird, dass heißt, das stirnseitige Ende des Stutzens 12 die Dichtung 50 freigibt, dann strömt Luft von außen in den Luftraum 40 des Pumpenbalges 10 nach. Hat der Balg seine Ausgangsposition oder seine Ausgangsstellung erreicht, wie in der Zeichnung dargestellt, dann kann der Pumpvorgang beginnend mit einer Verschiebung des Betätigungstellers 36 in Richtung des Pfeils 38 erneut beginnen.

### Bezugszeichenliste:

- 1: Schaumpumpe
- 3: Gehäuse
- 4: Nut
- 5: Gehäusekranz
- 7: Medienbehälter
- 10: Pumpenbalg
- 12: Stutzen
- 14: Medienkammer
- 16: Boden
- 18: Medienanpassöffnung
- 20: Ventilstange
- 22: Ventilstangenbohrung
- 24: Mischkammer
- 26: Betätigungsteller
- 28: Betätigungstellerbund
- 30: Siebeinsatz
- 32: Gewebe
- 34: Gewebe
- 36: Luftauslassöffnung
- 38: Pfeil
- 40: Luftraum
- 42: Lufteinlassöffnung
- 44: Nut
- 46: Ventilstangendichtung
- 48: Medieneinlassöffnung
- 50: Dichtung

## Patentansprüche

1. Schaumpumpe (1) umfassend einen Pumpenbalg (10), wobei der Pumpenbalg (10) ausgabeseitig einen Stutzen (12) aufweist, wobei der Stutzen (12) eine Ventilstange (20) mit einer zentrischen Bohrung zur Bildung einer Mischkammer (24) aufweist, wobei die Mischkammer (24) mit dem Luftraum des Pumpenbalges (10) durch mindestens eine Luftauslassöffnung (36) in Verbindung steht, wobei im Bereich des Stutzens (12) des Pumpenbalges (10) eine verschließbare Lufteinlassöffnung (42) zu dem Luftraum des Pumpenbalges (10) vorgesehen ist, wobei die Mischkammer (24) mit der Medienkammer (14) durch eine verschließbare Medieneinlassöffnung (48) in Verbindung steht, wobei die Medienkammer (14) durch eine Medienanpassöffnung (18) mit einem Medienbehälter (7) verbunden ist, wobei durch eine Variabilität des Querschnitts der Medienanpassöffnung (18) eine Gemischzusammensetzung einstellbar ist.

2. Schaumpumpe (1) nach Anspruch 1,
**dadurch gekennzeichnet,**
**dass** die Ventilstange (20) ausgabeseitig einen Betätigungsteller (26) für den Pumpenbalg (10) aufweist.

3. Schaumpumpe (1) nach Anspruch 2,
**dadurch gekennzeichnet,**
**dass** die verschließbare Lufteinlassöffnung (42) zu dem Luftraum (40) des Pumpenbalges (10) im Übergangsbereich des Stutzens (12) des Pumpenbalges (10) zum Betätigungsteller (26) angeordnet ist.

4. Schaumpumpe (1) nach einem der voranstehenden Ansprüche, **dadurch gekennzeichnet,**
**dass** die Lufteinlassöffnung (42) mindestens durch eine Dichtung (50), z. B. einen O-Ring verschließbar ist.

5. Schaumpumpe (1) nach einem der voranstehenden Ansprüche,
**dadurch gekennzeichnet,**
**dass** die Ventilstange (20) relativ zum Pumpenbalg (10) beweglich durch den Pumpenbalg (10) mit dem Stutzen (12) aufnehmbar ist.

6. Schaumpumpe (1) nach einem der voranstehenden Ansprüche,
**dadurch gekennzeichnet,**
**dass** die Medieneinlassöffnung (48) durch eine Ventilstangendichtung (46) verschließbar ist, wobei die Ventilstangendichtung (46) an der Wandung der Medienkammer (14) anliegt, wobei die Ventilstange (20) relativ zur Ventilstangendichtung (46) beweglich ist.

7. Schaumpumpe (1) nach einem der voranstehenden Ansprüche,
**dadurch gekennzeichnet,**
**dass** die Medienkammer (14) domartig ausgebildet ist, und im Boden (16) am stirnseitigen Ende der Medienkammer (14) eine Medienanpassöffnung (18) angeordnet ist.

8. Schaumpumpe (1) nach einem der voranstehenden Ansprüche,
**dadurch gekennzeichnet,**
**dass** der Pumpenbalg (10) als Faltenbalg ausgebildet ist.

9. Schaumpumpe (1) nach einem der voranstehenden Ansprüche,
**dadurch gekennzeichnet,**
**dass** der Pumpenbalg (10) konisch auf den Stutzen (12) zulaufend ausgebildet ist.

10. Schaumpumpe (1) nach einem der Ansprüche 2 bis 9,
**dadurch gekennzeichnet,**
**dass** der Betätigungsteller (26) einen Siebeinsatz (30) aufweist.

11. Schaumpumpe (1) nach einem der voranstehenden Ansprüche,
**dadurch gekennzeichnet,**
**dass** der Pumpenbalg (10) mit einem Gehäuse (3) in Verbindung steht, wobei das Gehäuse (3) einen Gehäusekranz (5) zur Aufnahme des Medienbehälters (7) aufweist.

12. Schaumpumpe (1) nach einem der voranstehenden Ansprüche,
**dadurch gekennzeichnet,**
**dass** in die Medienanpassöffnung (18) ein Reduzierstück einsetzbar ist.

13. Schaumpumpe (1) nach einem der Ansprüche 6 bis 12,
**dadurch gekennzeichnet,**
**dass** die Ventilstangendichtung (46) an der Innenwandung der Medienkammer (14) verschieblich anliegt.

## Claims

1. A foam pump (1) comprising a pump bellows (10), wherein the pump bellows (10) has a socket (12) at its output side, wherein the socket (12) comprises a valve rod (20) with a central bore forming a mixing chamber (24), wherein the mixing chamber (24) is in communication with the air space of the pump bellows (10) through at least one air outlet opening (36), wherein a closable air inlet opening (42) into the air space of the pump bellows (10) is provided in the area of the socket (12) of the pump bellows (10), wherein the mixing chamber (24) is in communication with the medium chamber (14) by way of a closable medium inlet opening (48), wherein the medium chamber (14) is in communication with a medium container (7) through a medium adjustment opening (18), wherein a composition of a mixture is adjustable through a variability of the cross-section of the medium adjustment opening (18).

2. The foam pump (1) according to claim 1,
**characterized in that**
the valve rod (20) further comprises an actuation plate (26) for the pump bellows (10) at the output side.

3. The foam pump (1) according to claim 2,
**characterized in that**
the closable air inlet opening (42) into the air space (40) of the pump bellows (10) is disposed in the transition region of the socket (12) of the pump bellow (10) to the actuation plate (26).

4. The foam pump (1) according to one of the afore-mentioned claims, **characterized in that** the air inlet opening (42) is closable at least by a seal (50), e.g. an O-ring.

5. The foam pump (1) according to one of the afore-mentioned claims, **characterized in that**
the valve rod (20) can be received by the pump bellows (10) with the socket (12) in such a manner that it is movable relative to the pump bellows (10).

6. The foam pump (1) according to one of the afore-mentioned claims, **characterized in that**
the medium inlet opening (48) is closable by a valve rod seal (46), wherein the valve rod seal (46) rests against the wall of the medium chamber (14), wherein the valve rod (20) is movable relative to the valve rod seal (46).

7. The foam pump (1) according to one of the afore-mentioned claims, **characterized in that**
the medium chamber (14) is dome-shaped and that a medium adjustment opening (18) is located in the base (16) at the front-side end of the medium chamber (14).

8. The foam pump (1) according to one of the afore-mentioned claims, **characterized in that**
the pump bellows (10) is designed as a concertina-like bellows.

9. The foam pump (1) according to one of the afore-mentioned claims, **characterized in that**
the pump bellows (10) is designed so as to taper conically toward the socket (12).

10. The foam pump (1) according to one of the claims 2 to 9, **characterized in that**
the actuation plate (26) comprises a screen insert (30).

11. The foam pump (1) according to one of the afore-mentioned claims, **characterized in that**
the pump bellows (10) is in communication with a housing (3), wherein the housing (3) comprises a housing rim (5) for receiving the medium container (7).

12. The foam pump (1) according to one of the afore-mentioned claims, **characterized in that**
a reducing piece is insertable into the medium adjustment opening (18).

13. The foam pump (1) according to one of the claims 6 to 12,
**characterized in that**
the valve rod seal (46) displaceably rests against the inner wall of the medium chamber (14).

## Revendications

1. Pompe à mousse (1) comprenant un soufflet de pompe (10), où le soufflet de pompe (10) comporte un embout (12) côté sortie, où l'embout (12) comporte une tige de soupape (20) avec un alésage central pour former une chambre de mélange (24), où la chambre de mélange (24) est reliée à la cavité du soufflet de pompe (10) par au moins une ouverture de sortie d'air (36), où une ouverture d'entrée d'air (42) obturable sur la cavité du soufflet de pompe (10) est prévue dans la région de l'embout (12) du soufflet de pompe (10), où la chambre de mélange (24) est reliée à la chambre à produit (14) par une ouverture d'entrée de produit (48) obturable, où la chambre à produit (14) est reliée avec un conteneur de produit (7) par une ouverture d'ajustement de produit (18), où la composition du mélange est ajustable par le biais d'une variabilité de la section transversale de l'ouverture d'ajustement de produit (18).

2. Pompe à mousse (1) selon la revendication 1,
**caractérisée en ce que**
la tige de soupape (20) comporte, côté sortie, une plaque d'activation (26) pour le soufflet de pompe (10).

3. Pompe à mousse (1) selon la revendication 2,
**caractérisée en ce que**
l'ouverture d'entrée d'air (42) obturable sur la cavité (40) du soufflet de pompe (10) est disposée dans la région de transition entre l'embout (12) du soufflet de pompe (10) et la plaque d'activation (26).

4. Pompe à mousse (1) selon l'une quelconque des revendications précédentes,
**caractérisée en ce que**
l'ouverture d'entrée d'air (42) est obturable au moins par un joint (50), par exemple un joint torique.

5. Pompe à mousse (1) selon l'une quelconque des revendications précédentes,
**caractérisée en ce que**
la tige de soupape (20) peut être reçue par le soufflet de pompe (10) avec l'embout (12), de manière mobile par rapport au soufflet de pompe (10).

6. Pompe à mousse (1) selon l'une quelconque des revendications précédentes,
**caractérisée en ce que**
l'ouverture d'entrée de produit (48) est obturable par un joint de tige de soupape (46), où le joint de tige de soupape (46) est en appui sur la paroi de la chambre de produit (14), où la tige de soupape (20) est mobile par rapport au joint de tige de soupape (46).

7. Pompe à mousse (1) selon l'une quelconque des revendications précédentes,
**caractérisée en ce que**
la chambre de produit (14) prend la forme d'un dôme et une ouverture d'ajustement de produit (18) est disposée dans le fond (16) à l'extrémité frontale de la chambre de produit (14).

8. Pompe à mousse (1) selon l'une quelconque des revendications précédentes,
**caractérisée en ce que**
le soufflet de pompe (10) prend la forme d'un soufflet à plis.

9. Pompe à mousse (1) selon l'une quelconque des revendications précédentes,
**caractérisée en ce que**
le soufflet de pompe (10) s'étend en pointe conique vers l'embout (12).

10. Pompe à mousse (1) selon l'une des revendications 2 à 9,
**caractérisée en ce que** la plaque d'activation (26) comporte un insert filtrant (30).

11. Pompe à mousse (1) selon l'une quelconque des revendications précédentes,
**caractérisée en ce que**
le soufflet de pompe (10) est reliée à un boîtier (3), où le boîtier (3) comporte une couronne de boîtier (5) pour recevoir le conteneur de produit (7).

12. Pompe à mousse (1) selon l'une quelconque des revendications précédentes,
**caractérisée en ce que**
une pièce de réduction peut être insérée dans l'ouverture d'ajustement de produit (18).

13. Pompe à mousse (1) selon l'une des revendications 6 à 12,
**caractérisée en ce que**
le joint de tige de soupape (46) est en appui mobile sur la paroi intérieure de la chambre de produit (14).
